# EUROPÄISCHE PATENTANMELDUNG

(11) **EP 4 644 461 A1**
(43) Veröffentlichungstag der Anmeldung: **05.11.2025**
(21) Anmeldenummer: 25173274.9
(22) Anmeldetag: 29.04.2025
(51) Int. Cl.: C08G 63/90, C08G 63/16

(54) **VERFAHREN ZUR ENTFERNUNG VON NIEDERMOLEKULAREN BESTANDTEILEN AUS POLYESTERN**

(30) Priorität: 29.04.2024 DE 102024112034; 17.12.2024 DE 102024138263
(71) Anmelder: Fraunhofer-Gesellschaft zur Förderung der angewandten Forschung e.V., 80686 München (DE)
(72) Erfinder: VATER, Marcus, 14476 Potsdam (DE); MALKE, Marlen, 14476 Potsdam (DE); BALKO, Jens, 14476 Potsdam (DE); WENDLER, Ulrich, 14476 Potsdam (DE); BÜSSE, Thomas, 14476 Potsdam (DE)
(74) Vertreter: Maiwald GmbH

(57) **Zusammenfassung**

Die Erfindung betrifft ein Verfahren zur Entfernung von niedermolekularen Bestandteilen aus Polyestern und einen Polyester mit einer geringen Polydispersität und niedrigem Anteil an niedermolekularen Bestandteilen.

## Beschreibung

Die vorliegende Erfindung betrifft ein Verfahren zur Extraktion von niedermolekularen Bestandteilen aus Polyestern. Ferner betrifft die vorliegende Erfindung einen Polyester mit niedriger Polydispersität und geringem Massenanteil an niedermolekularen Bestandteilen.

### Technischer Hintergrund der Erfindung

Polybutylensuccinat (PBS) ist ein Copolymer aus den Monomeren Bernsteinsäure (engl. Succinat) und 1,4-Butandiol. Polybutylensuccinat wird der Gruppe der linearen aliphatischen Polyester zugeordnet.

Polyester sind Polymere deren Monomere über Esterfunktionen verknüpft sind, die wiederum die Hauptkette bilden.

Polyester werden gewöhnlich durch Polymerisation oder Polykondensation hergestellt. Beide Herstellungsmethoden ist die Verknüpfung von Monomeren zu Polymerketten unterschiedlicher Länge gemein. Diese Polymerketten können linear, verzweigt oder ringförmig sein. PBS wird typischerweise durch Polykondensation hergestellt. Je nachdem wie die mittlere Kettenlänge eingestellt wird, erhält man durch die Synthese ein Polymer mit unterschiedlich hohen Gewichtsmittel des Molekulargewichts (M_{w}).

Unabhängig von dem Gewichtsmittel des Molekulargewichts (M_{w}) ist sind im Polykondensat nach der Polymerisation immer noch Monomere und niedermolekulare Kondensationsprodukte - lineare sowie ringförmige - mit einem Massenmittel der Molmasse (Mw) von ≤ 2.000 g/mol enthalten.

Dieser Umstand ist auch von anderen Polykondensaten wie beispielsweise Polyamid 6 bekannt.

Die Anwesenheit von niedermolekularen Bestandteilen verändern die Eigenschaften von reinem PBS in unerwünschter Weise. So wirken sie als Weichmacher, der das Elastizitätsmodul (E-Modul) und die Grenzbiegespannung beeinflussen kann. Ferner pflegen die niedermolekulare Verbindungen (Extrakt) im Laufe der Zeit aus dem Polybutylensuccinat "auszuschwitzen" und einen Belag auf der Materialoberfläche zu bilden. Der schmierige Griff und die optische Beeinträchtigung glänzender oder gefärbter Bauteile reduzieren die Marktfähigkeit extrakthaltiger Polybutylensuccinate, so dass sie heute nur begrenzt Anwendung finden, z.B. für Bauteile in nicht sichtbaren Bereichen. Auch diese Beeinträchtigungen sind zum Beispiel vom Polyamid 6 bekannt.

Das Rohpolymerisat enthält rund 2 und mehr Gew.% Anteile mit einem Massenmittel der Molmasse (Mw) von ≤ 2.000 g/mol.

Für einen breiten Einsatz des Polymers müssten diese Anteile durch Extraktion abgetrennt werden. Bei der Extraktion von Polymeren können verschiedene Methoden, wie Soxhlet-Extraktion, die fest-flüssig-Extraktion mit Lösungsmitteln und Lösungsmittelgemischen sowie überkritischen Fluiden und Ultraschallextraktion Anwendung finden.

Vorzugsweise wird im Stand der Technik ein Teil des Extraktes nach der Polymerisation mit einem Gemisch aus Wasser und Ethanol und/oder Isopropanol von dem Rohpolymerisat abgetrennt.

Bisher bekannten Verfahren sind aber unzureichend, da die erhaltenen Produkte kurze Zeit nach der Verarbeitung weiterhin eine Bildung von Belag (Schlieren) zeigen.

Es wurde nun überraschenderweise herausgefunden, dass sich nichtaromatische, organischen Lösungsmittel ausgewählt aus der Gruppe bestehend aus Ethern, Ketonen und Mischungen davon, besonders gut als Extraktionsmittel eignen. Dadurch kann der Hauptteil der niedermolekularen Bestandteile aus den Polyestern extrahiert werden und dabei die Schlierenbildung bei Polyesterbauteilen verhindert werden.

### Beschreibung der Erfindung

Die vorliegende Erfindung betrifft ein Verfahren für die die Extraktion von niedermolekularen Bestandteilen aus Polyestern, dadurch gekennzeichnet, dass das Verfahren die Schritte
i) Vorlegen einer festen polyesterhaltigen Phase
ii) Vorlegen einer flüssigen Extraktionsmittelphase
iii) in Kontakt bringen der festen polyesterhaltigen Phase mit der flüssigen Extraktionsmittelphase,
umfasst,
dadurch gekennzeichnet, dass
- die flüssige Extraktionsmittelphase ein nichtaromatisches, organisches Lösungsmittel umfasst, wobei das nichtaromatische, organische Lösungsmittel ausgewählt ist aus der Gruppe bestehend aus Ethern, Ketonen und Mischungen davon, und
- die feste polyesterhaltige Phase einen Polyester enthält, welcher aus Dicarbonsäure-Monomeren und Diol-Monomeren hergestellt wurde.

Wie oben erwähnt, enthält die feste polyesterhaltigen Phase im erfinderischen Verfahren einen Polyester, welcher aus Dicarbonsäure-Monomeren und Diol-Monomeren hergestellt wurde.

Die Dicarbonsäure-Monomere sind dabei bevorzugt ausgewählt aus der Gruppe bestehend aus Alkan-Dicarbonsäuren, Alken-Dicarbonsäuren, und Mischungen davon, noch bevorzugter aus Oxalsäure, Malonsäure, Bernsteinsäure, Glutarsäure, Adipinsäure, Pimelinsäure, Maleinsäure und Furmarsäure, mehr bevorzugter ausgewählt aus Bernsteinsäure, Maleinsäure und Mischungen davon. Mischungen von Monomeren heißt in dieser Offenbarung, dass verschiedene Monomer-Typen vorliegen können. So kann zum Beispiel eine Mischung aus Bernsteinsäure und Maleinsäure-Monomeren bei der Polykondesation mit einem Diol benutzt werden.

Die Diol-Monomere sind bevorzugt ausgewählt aus der Gruppe bestehend aus 1,2 Ethandiol, 1,3 Propandiol, 1,4 Butandiol, 1,5 Pentandiol und 1,6 Hexandiol, mehr bevorzugt ist das Diol-Monomer 1,4 Butandiol.

Entsprechend kann der Polyester aus verschiedenen Dicarbonsäure-Untereinheiten und Diol-Unterheiten aufgebaut sein. Bevorzugt ist der Polyester ein Polybutylensuccinat hergestellt aus Bernsteinsäure und 1,4 Butandiol-Monomeren, ein Polyester hergestellt aus Bernsteinsäure, Maleinsäure und 1,4 Butandiol-Monomeren, oder Mischungen davon.

Die feste polyesterhaltige Phase kann neben dem Polyester noch weiter Bestandteile enthalten.

Bevorzugt enthält die feste polyesterhaltige Phase den Polyester in einer Menge im Bereich von 20 bis 100 Gew.%, mehr bevorzugt von 40 bis 100 Gew.%, noch mehr bevorzugt von 50 bis 100 Gew.%, bezogen auf das Gesamtgewicht der festen polyesterhaltigen Phase.

Weitere mögliche Bestandteile der festen polyesterhaltigen Phase, welche typischerweise auch in Polyester Bauteilen vorkommen, sind zum Beispiel Specksteinmehl oder Polylactid.

Bevorzugt liegt die feste polyesterhaltige Phase als Granulat in Pellet-Form vor.

Die flüssige Extraktionsmittelphase umfasst ein nichtaromatisches, organisches Lösungsmittel, wobei das nichtaromatische, organische Lösungsmittel ausgewählt ist aus der Gruppe bestehend aus Ethern, Ketonen und Mischungen davon.

Bevorzugt ist das nichtaromatische, organische Lösungsmittel ausgewählt aus der Gruppe bestehend aus cyclischen Ethern, Ketonen und Mischungen davon, mehr bevorzugt ist das nichtaromatische, organische Lösungsmittel ausgewählt aus der Gruppe bestehend aus Tetrahydrofuran, Aceton, oder Mischungen davon, noch mehr bevorzugt is das nichtaromatische, organische Lösungsmittel Tetrahydrofuran oder Aceton.

Bevorzugt enthält die flüssige Extraktionsmittelphase das nichtaromatische, organische Lösungsmittel in einer Menge im Bereich von 20 bis 100 Gew.%, mehr bevorzugt von 25 bis 100 Gew.%, bezogen auf das Gesamtgewicht der flüssigen Extraktionsmittelphase.

Neben dem nichtaromatischen, organischen Lösungsmittel kann die flüssige Extraktionsmittelphase weitere anorganische Lösungsmittel enthalten.

In einer bevorzugten Ausführungsform enthält die flüssige Extraktionsmittelphase Tetrahydrofuran (THF) und Wasser. Mehr bevorzugt enthält die flüssige Extraktionsmittelphase THF und Wasser mit einem Gewichtsverhältnis von THF zu Wasser in einem Bereich von 1:10 bis 7:10, noch mehr bevorzugt von 2:10 bis 5:10. Es ist bevorzugt, dass in Schritt iii) die feste polyesterhaltige Phase und die flüssige Extraktionsmittelphase relativ zueinander eine Bewegung erfahren.

Bevorzugte Verfahren für Schritt iii) sind eine Soxhlet-Extraktion, eine gerührte fest-flüssig-Extraktion oder eine Wanderung der Extraktionsmittelfront durch ein Festbett der festen polyesterhaltigen Phase.

Bevorzugt liegt das Gewichtsverhältnis der polyesterhaltigen Phase zur Extraktionsmittelphase bei der gerührten fest-flüssig-Extraktion in einem Bereich von 1:1 bis 1:100, mehr bevorzugt von 1:15 bis 1:75, noch mehr bevorzugt von 1:18 bis 1:60.

Schritt iii) wird bevorzugt für einen Zeitraum im Bereich von 0,1 bis 72 h, mehr bevorzugt von 1 bis 36 h, noch mehr bevorzugt von 2 bis 30 h durchgeführt.

Die Temperatur ist in Schritt iii) bevorzugt in einem Bereich von 30 bis 80 °C, mehr bevorzugt von 45 bis 60 °C.

Weiterhin umfasst das Verfahren bevorzugt die Schritte
iv) Trennung der festen polyesterhaltige Phase von der flüssigen Extraktionsmittelphase, und
v) Trocknen der festen polyesterhaltigen Phase, wobei ein polyesterhaltiger Feststoff mit geringen extrahierbaren Anteilen erhalten wird.

Bevorzugt wird in Schritt v) der extrahierte polyesterhaltiger Feststoff bei erhöhten Temperaturen zwischen 30 und 100 °C und einem Absolutdruck im Bereich von 0,1 bis 100 mbar bis zur Gewichtskonstanz getrocknet.

Das nichtaromatische organische Lösungsmittel der flüssigen Extraktionsmittelphase, welche nach dem Extraktionsverfahren die extrahierten niedermolekularen Bestandteile des Polyesters enthält, kann durch Destillation, bevorzugt durch Destillation bei verringertem Druck, zurückgewonnen werden.

Der durch das erfindungsgemäße Verfahren erhaltene Polyester enthält einen signifikant reduzierten Gewichtsanteil an niedermolekularen Bestandteilen. Entsprechend hat der extrahierte Polyester einen Gewichtsanteil an niedermolekularen Bestandteilen, wie Polykondensationsprodukten und Monomeren, mit einem Massenmittel der Molmasse (Mw) von ≤ 2.000 g/mol von weniger als 1 Gew.%, bevorzugt in einem Bereich von 0,01 Gew.% bis 0,5 Gew.%, bezogen auf die Gesamtmasse des Polyesters.

Durch den reduzierten Anteil an niedermolekularen Bestandteilen hat der erfindungsgemäße Polyester eine geringere Polydispersität (M_{w} /Mₙ).

Bevorzugt hat der erfindungsgemäße Polyester eine Polydispersität (M_{w} /Mₙ), ermittelt durch GPC im Bereich von 2,0 bis 5,0, mehr bevorzugt von 3,0 bis 4,5.

### Experimentalteil

### Ermittlung Rf-Wert der Bestandteile von PBS in Lösungsmitteln

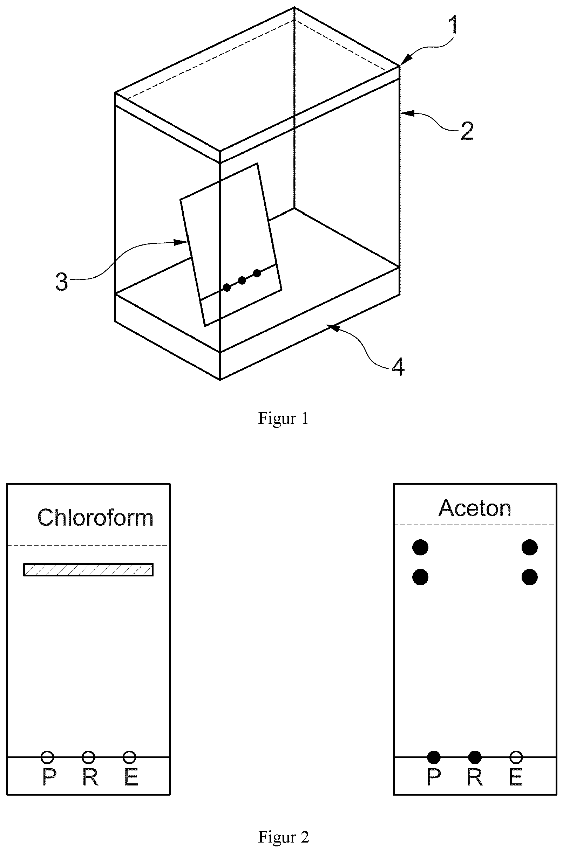

Der R_{f}-Wert (Elutionszahl) wurde mittels Dünnschichtchromatographie in einem Aufbau wie in Fig. 1 gezeigt ermittelt. Für die Dünnschichtchromatographie (DC, *engl. thin layer chromatography, TLC*) wird die Trägersubstanz der stationären Phase (SiO₂ oder Al₂O₃) als dünne Schicht gleichmäßiger Dicke auf eine plane, entfettete Platte (3) aufgebracht. Diese Oxide enthalten zur Stabilisierung der Schicht bis zu 15 % Bindemittel (meist Gips). Für die Bestimmung der R_{f}-Werte in der vorliegenden Offenbarung wurden käufliche, fertig beschichtete DC-Folien ALUGRAM Xtra SIL G/UV254 der Firma Macherey-Nagel verwendet.

Die Dünnschichtchromatographie wurde bei Raumtemperatur (25 °C±2 °C) durchgeführt.

### Vorbereitung der Platte (3)

Es wurde das Rohpolymer, das extrahierte Polymer (Raffinat) und das Gemisch der extrahierten Komponenten (Extrakt) verglichen. Diese müssen auf einer horizontalen Geraden (Startlinie) mit gleichmäßigem Abstand von ca. 10-12 mm vom unteren Plattenrand liegen. Diese Startlinie wurde mit einem Bleistift gezeichnet. Auf dieser Linie wurden die zu untersuchenden Stoffe in gelöster Form aufgetragen. Verwendet wurde eine 0,5 Gew.% PBS Lösung in Chloroform. Zum Auftragen wurden vorgefertigte Mikrokapillaren verwendet, in die man die Lösung eindringen lässt. Beim senkrechten Aufsetzen der gefüllten Kapillare auf die Schicht tritt die Lösung wieder aus. Der Durchmesser der entstehenden Flecken betrug 1-2 mm. Untereinander waren die Abstände > 5 mm und von den seitlichen Plattenrändern > 8 mm.

### Vorbereitung der DC-Kammer (2)

Bevor die Platte mit den Proben in die DC-Kammer eingesetzt wurde, wurde das zu untersuchende Lösungsmittel oder Lösungsmittel-Gemisch in die Kammer (2) eingeführt, sodass sich ein Lösungsmittelstand (4) von ca. 7 mm in der Kammer (2) ausbildete. Anschließend wurde die Kammer (2) mit einem Deckel (1) abgedeckt und für ca. 5 min stehengelassen, sodass sich die Atmosphäre innerhalb der Kammer mit Lösungsmittel sättigen konnte.

### Ablauf der Dünnschichtchromatographie

Nach dem Trocknen der Substanzflecken wurde die Platte (3) in die abdeckbare Kammer (2) eingesetzt, die das Lösungsmittel oder Lösungsmittelgemisch (4) enthielt. Durch die Kapillarkräfte stieg das Laufmittel entgegen der Schwerkraft in der DC-Platte auf. Nach Erreichen der geplanten Steighöhe (etwa 1 cm vor dem oberen Ende der Platte), wurde die DC-Platte der Kammer entnommen, die Laufmittelfront sofort markiert (Bleistiftstrich) und die Platte an der Luft (Abzug) getrocknet.

### Auswertung DC

Die Auswertung der Platte erfolgte durch Vergleich mit einer auf der gleichen Platte mitlaufenden authentischen Verbindung und durch Berechnung der R_{F} -Werte. Der R_{F}-Wert ist das Verhältnis der von der Substanz zurückgelegten Strecke zu der Strecke zwischen Startlinie und Front des Lösungsmittels. Der R_{F}-Wert ist für jede Verbindung in diesem bestimmten Trennsystem (Zusammensetzung Lösungsmittel, Temperatur, Verhältnisse Lösungsmittel zu allen Komponenten) eine charakteristische Größe.

### Gelpermeationschromatographie

Die verwendeten Polyester wurden vor und nach dem Extraktionsverfahren mittels Gelpermeationschromatographie (GPC) nach DIN EN ISO 13885-1 analysiert. Zum Einsatz kam dabei ein Polymer-Laboratories Agilent mit der folgenden Bestückung:
- PLgel 10 µm Vorsäule
- 3 x PLgel 20 µm Mixed-A, 7,5 mm I.D. x 300 mm, 2.000 - 40.000.000 g/mol
- Gerätesteuerung, Datenerfassung und -verarbeitung mit der Software Empower 3 FR5 (Waters)

Die folgenden GPC-Bedingungen wurden eingestellt:
- Eluent: TCM (Trichlormethan)
- Flussrate: 1 mL/min
- Temperatur des Säulenofens: 25 °C
- Injektionsvolumen: 100 µL (22 °C)
- Probenkonzentration: 5 mg/ml
- Detektor: RI 30 °C

### Probenvorbereitung

20 mg der Proben wurden in 4 ml Eluent durch leichtes Schütteln für 20 h bei Raumtemperatur gelöst. Die Lösungen waren klar, und die Proben waren vollständig aufgelöst. Die Lösungen wurden durch 1 µm PTFE-Membranen filtriert und direkt in die GPC direkt injiziert. Danach wurden die GPC-Messungen durchgeführt.

### Verwendete PBS Ausgangspolymere

PAZ 20: PBS mit einem Zahlenmittel der Molmasse (Mₙ) von 22 kg/mol, einem Massenmittel der Molmasse (M_{w}) von 173 kg/mol, und einer Polydispersiät (M_{w}/Mₙ) von 7,9. Der Massenanteil an niedermolekularen Kondensationsprodukten mit einem Massenmittel der Molmasse (M_{w}) von ≤ 2.000 g/mol in dem kommerziellen PBS war 1,86 Gew.%, ermittelt durch GPC und bestätigt durch Massenbilanz, Probe und Extrakt.

PAZ 29: PBS mit einem Zahlenmittel der Molmasse (Mₙ) von 22 kg/mol, einem Massenmittel der Molmasse (M_{w}) von 173 kg/mol, und einer Polydispersiät (M_{w}/Mₙ) von 7,9. Der Massenanteil an niedermolekularen Kondensationsprodukten mit einem Massenmittel der Molmasse (M_{w}) von ≤ 2.000 g/mol in dem kommerziellen PBS war 1,84 Gew.%, ermittelt durch GPC und bestätigt durch Massenbilanz, Probe und Extrakt.

FZ71: Kommerzielles PBS von Mitsubishi Chemical Performance Polymers (MCPP) mit einem Zahlenmittel der Molmasse (Mₙ) von 29 kg/mol, einem Massenmittel der Molmasse (M_{w}) von 141 kg/mol, und einer Polydispersiät (M_{w}/Mₙ) von 4,9. Der Massenanteil an niedermolekularen Kondensationsprodukten mit einem Massenmittel der Molmasse (M_{w}) von ≤ 2.000 g/mol in dem kommerziellen PBS war 1,12 Gew.%, ermittelt durch GPC und bestätigt durch Massenbilanz, Probe und Extrakt.

FZ91: Kommerzielles PBS von Mitsubishi Chemical Performance Polymers (MCPP) mit einem Zahlenmittel der Molmasse (Mₙ) von 39 kg/mol, einem Massenmittel der Molmasse (M_{w}) von 199 kg/mol, und einer Polydispersiät (M_{w}/Mₙ) von 5.1, ermittelt durch GPC. Der Massenanteil an niedermolekularen Kondensationsprodukten mit einem Massenmittel der Molmasse (M_{w}) von ≤ 2.000 g/mol in dem kommerziellen PBS war 1,11 Gew.%, ermittelt durch GPC und bestätigt durch Massenbilanz, Probe und Extrakt.

### Erfindungsgemäßes Beispiel 1

10,000 g eines Polybutylensuccinats (PAZ 20) wurde in einer Soxhlet-Extraktion für 24 h mit Aceton als Extraktionsmittel bei einer Temperatur von 56 °C extrahiert. Anschließend wurde das Extraktionsmittel an einem Rotationsverdampfer bei 56 °C und einem abschließenden Vakuum von 80 mbar Absolutdruck eingeengt. Der erhaltene Extrakt wurde im Vakuumtrockenschrank bei < 10 mbar Absolutdruck für weitere 10 h bis zur Gewichtskonstanz getrocknet. Das extrahierte Granulat wurde im Vakuumtrockenschrank bei einer Temperatur von 40 °C und einem Enddruck von < 10 mbar Absolutdruck in 24 h bis zur Gewichtskonstanz getrocknet. Die Masse des extrahierten Polybutylensuccinats PBSₑₓ betrug nach der Extraktion 9,807 g. Die Masse des Extrakts betrug nach dem Trocknen 0,193 g. Um einen Abbau des Polybutylensuccinats durch die Extraktion ausschließen zu können, wurden die Polymerproben vor und nach der Extraktion, ebenso wie das Extrakt mittels Gelpermeationschromatographie (GPC) analysiert. Abbildung 1 zeigt die graphische Auswertung der erhaltenen Daten. Das Massenmittel der Molmasse (M_{w}) des PBSₑₓ lag bei 172 kg/mol und die Polydispersität (M_{w}/Mₙ) verringerte sich auf 4,0. Das extrahierte Polybutylensuccinat PBSₑₓ zeigte nach 60 d Lagerung bei 40 °C keine Schlieren-Bildung auf seiner Oberfläche. Vom eingesetzten Extraktionsmittel konnten nach der Trocknung des Polymers und des Extrakts 96,3 Gew.% der Ausgangsmenge zurückgewonnen werden.

### Erfindungsgemäße Beispiele 2a-2d

4 Extraktionen mit je 10,000 g eines Polybutylensuccinats (PAZ20) wurden in einer gerührten fest-flüssig-Extraktion für 1, 3, 6 und 10 h bei einer Temperatur von 50 °C extrahiert. Das Extraktionsmittel setzte sich jeweils aus 30 Gew.% Tetrahydrofuran und 70 Gew.% Wasser zusammen. Das Gewichtsverhältnis von Polymer zum Extraktionsmittelgemisch betrug jeweils 1:20. Nach dem Ende der Extraktionszeit wurden Granulate und Extrakte wie in Beispiel 1 getrennt und getrocknet. Die Massen des extrahierten Polybutylensuccinats PBSₑₓ betrugen nach der Extraktion 9,945 g, 9,890 g, 9,815 g und 9,808 g. Die Extrakt Massen betrugen nach dem Trocknen 0,055 g, 0,110 g, 0,185 g und 0,192 g. Die Massenmittel der Molmasse (M_{w}) der jeweiligen PBSₑₓ(2a)-PBSₑₓ(2d) lagen nach den Extraktionen bei 173, 172, 173 und 172 kg/mol und die Polydispersitäten bei 7,2, 7,0, 5,9, und 4,0 (s. Tabelle 1). Die für 1, 3 und 6 h extrahierten PBSₑₓ(2a)-PBSₑₓ(2c) zeigten nach 4 bis 12 Tagen Lagerung bei 40 °C Schlieren-Bildung auf den Oberflächen. Das für 10 h extrahierte PBSₑₓ(2d) zeigte nach 60 d bei 40 °C keine Schlieren-Bildung. Vom eingesetzten Extraktionsmittelgemisch konnten nach der Trocknung des Polymers und des Extrakts, 96,1 Gew.%, 95,8 Gew.%, 95,7 Gew.% und 96,0 Gew.% der Ausgangsmenge zurückgewonnen werden.

**Tabelle 1: Eigenschaften der Polyester der Beispiele 2a-2d**

| Beispiel | PAZ20 | 2a | 2b | 2c | 2d |
|---|---|---|---|---|---|
| M_{w} [kg/mol] | 173 | 173 | 173 | 173 | 172 |
| M_{w}/Mₙ | 7,9 | 7,2 | 7,0 | 5,9 | 4,0 |
| PBS:LM | - | 1:20 | 1:20 | 1:20 | 1:20 |
| Dauer [h] | - | 1 | 3 | 6 | 10 |
| m(Extrakt) [g] | - | 0,055 | 0,110 | 0,185 | 0,192 |
| Schlieren 40°C | J | J | J | J | N |

### Erfindungsgemäße Beispiele 3a-3e

5 Extraktionen (3a-3e) mit je 10,000 g eines Polybutylensuccinats (PAZ20) wurden in einer gerührten fest-flüssig-Extraktion für 3 h bei einer Temperatur von 50 °C extrahiert. Das Extraktionsmittel setzte sich jeweils aus 30 Gew.% Tetrahydrofuran und 70 Gew.% Wasser zusammen. Das Gewichtsverhältnis von Polymer zum Extraktionsmittelgemisch betrug 1:2, 1:5, 1:10, 1:20 und 1:50. Nach dem Ende der Extraktionszeit wurden Granulate und Extrakte wie in Beispiel 1 getrennt und getrocknet. Die Massen der PBSₑₓ betrugen nach der Extraktion 9,980 g, 9,950 g, 9,925 g, 9,890 g und 9,807 g. Die Extrakt Massen betrugen nach dem Trocknen 0,020 g, 0,050 g, 0,075 g, 0,110 g und 0,193 g. Die Massenmittel der Molmasse (M_{w}) der jeweiligen PBSₑₓ lagen nach den Extraktionen bei 173, 173, 173, 172 und 171 kg/mol und die Polydispersitäten verringerten sich auf 7,8, 7,2, 6,9, 5,3 und 4,0 (s. Tabelle 2). Die bei einem Gewichtsverhältnis von 1:2 bis 1:20 extrahierten PBSₑₓ(3a)-PBSₑₓ(3d) zeigten nach 2 bis 10 d Lagerung bei 40 °C Schlieren-Bildung auf den Oberflächen, das mit dem Gewichtsverhältnis von 1:50 erhaltene PBSₑₓ(3e) zeigte nach 60 d keine Schlieren-Bildung. Vom eingesetzten Extraktionsmittelgemisch konnten nach der Trocknung des Polymers und des Extrakts 95,4 Gew.%, 95,8 Gew.%, 95,8 Gew.%, 96,1 Gew.% und 96,0 Gew.% der Ausgangsmenge zurückgewonnen werden.

**Tabelle 2: Eigenschaften der Polyester der Beispiele 3a-3e**

| Beispiel | PAZ20 | 3a | 3b | 3c | 3d | 3e |
|---|---|---|---|---|---|---|
| M_{w} [kg/mol] | 173 | 173 | 173 | 173 | 172 | 171 |
| M_{w}/Mₙ | 7,9 | 7,8 | 7,2 | 6,9 | 5,3 | 4,0 |
| PBS:LM | - | 1:2 | 1:5 | 1:10 | 1:20 | 1:50 |
| Dauer [h] | - | 3 | 3 | 3 | 3 | 3 |
| m(Extrakt) [g] | - | 0,02 | 0,05 | 0,075 | 0,110 | 0,193 |

### Erfindungsgemäße Beispiele 4 und 5

Je 5.000 g eines Polybutylensuccinats (Mitsubishi FZ71 für Beispiel 4 und FZ91 für Beispiel 5, beides Copolymere aus Bernsteinsäure, 1,4-Butandiol, sowie Maleinsäure) wurden in einem Festbett mit wandernder Extraktionsmittelfront für 12 h mit Aceton als Extraktionsmittel bei einer Temperatur von 50 °C extrahiert. Anschließend wurde das Extraktionsmittel an einem Rotationsverdampfer bei 56 °C und einem abschließenden Vakuum von 80 mbar Absolutdruck eingeengt. Das erhaltene Extrakt wurde im Vakuumtrockenschrank bei < 10 mbar Absolutdruck für weitere 10 h bis zur Gewichtskonstanz getrocknet. Das extrahierte Granulat wurde im Vakuumtrockenschrank bei einer Temperatur von 40 °C und einem Enddruck von < 10 mbar Absolutdruck in 24 h bis zur Gewichtskonstanz getrocknet. Die Massen der erhaltenen PBSₑₓ(4) und PBSₑₓ(5) betrugen 4962,8 g und 4967,5 g. Die Extrakt Massen betrugen nach dem Trocknen 37,2 g und 32,6 g. Das Massenmittel der Molmasse (M_{w}) für PBSₑₓ(4) lag bei 142 kg/mol und die Polydispersität verringerte sich auf 4,0. Das Massenmittel der Molmasse (M_{w}) für PBSₑₓ(5) lag bei 198 kg/mol und die Polydispersität verringerte sich auf 4, 1. Die extrahierten Polybutylensuccinat PBSₑₓ(4) und PBSₑₓ(5) zeigten nach 60 d Lagerung bei 40 °C keine Schlieren-Bildung auf der Oberfläche. Die nicht extrahierten Gegenproben von FZ71 und FZ91 zeigten nach 3 bis 5 d bei 40 °C Schlieren-Bildung. Vom eingesetzten Extraktionsmittel konnten nach der Trocknung des PBSₑₓ und des Extrakts 98,3 Gew.% und 98,2 Gew.% der Ausgangsmenge zurückgewonnen werden.

### Erfindungsgemäßes Beispiel 6 (Maßstabsvergrößerung)

96,3 kg eines Polybutylensuccinat (PAZ 29) wurden in einem Festbett mit wandernder Extraktionsmittelfront für 12 h mit Aceton als Extraktionsmittel bei einer Temperatur 50 °C extrahiert. Anschließend wurde das Extraktionsmittel an einem Verdampfer bei 56 °C und einem abschließenden Vakuum von 80 mbar Absolutdruck eingeengt. Der erhaltene Extrakt wurde im Vakuumtrockenschrank bei kleiner 10 mbar Absolutdruck für weitere 20 h bis zur Gewichtskonstanz getrocknet. Das extrahierte Granulat wurde in einem Taumeltrockner bei einer Temperatur von 80 °C und einem Enddruck von < 10 mbar Absolutdruck in 24 h bis zur Gewichtskonstanz getrocknet. Die Masse des extrahierten Polybutylensuccinats PBSₑₓ(6) betrug nach der Extraktion 94,4 kg. Die Extrakt Masse betrug nach dem Trocknen 1,9 kg. Das Massenmittel der Molmasse (M_{w}) für PBSₑₓ(6) lag bei 205 kg/mol und die Polydispersität verringerte sich auf 3,05. Das extrahierte Polybutylensuccinat PBSₑₓ(6) zeigte nach 60 d Lagerung bei 40 °C keine Schlieren-Bildung auf der Oberfläche. Vom eingesetzten Extraktionsmittel konnten nach der Trocknung des Polymers und des Extrakts 99,6 Gew.% zurückgewonnen werden.

### Vergleichsbeispiel 7

10,000 g eines Polybutylensuccinats (PAZ20) wurde in einer gerührten fest-flüssig-Extraktion für 10 h bei einer Temperatur 56 °C extrahiert. Das Extraktionsmittel setze sich aus 10 Gew.% Ethanol und 90 Gew.% Wasser zusammen. Das Gewichtsverhältnis von Polymer zu Extraktionsmittelgemisch betrug 1:50. Nach dem Ende der Extraktionszeit wurde das Extraktionsmittel mit dem Extrakt durch Filtration durch eine G3 Fritte vom extrahierten Polymer getrennt. Anschließend wurden Extrakt und Polymergranulat wie unter Beispiel 1 beschrieben getrocknet. Die Masse des extrahierten Polybutylensuccinat PB Sₑₓ(7) betrug nach der Extraktion 9,903 g. Die Extrakt Masse betrug nach dem Trocknen 0,097 g. Das Massenmittel der Molmasse (M_{w}) für PB Sₑₓ(7) bei 163 kg/mol und die Polydispersität verringerte sich auf 6, 1. Das extrahiert Polybutylensuccinat (PAZ20) zeigt nach 3 d Lagerung bei 40 °C deutliche Schlieren Bildung auf seiner Oberfläche. Vom eingesetzten Extraktionsmittelgemisch konnten nach der Trocknung des Polymers und des Extrakts 96,5 Gew.% der Ausgangsmenge zurückgewonnen werden.

### Prüfung der Oligomerrückbildung

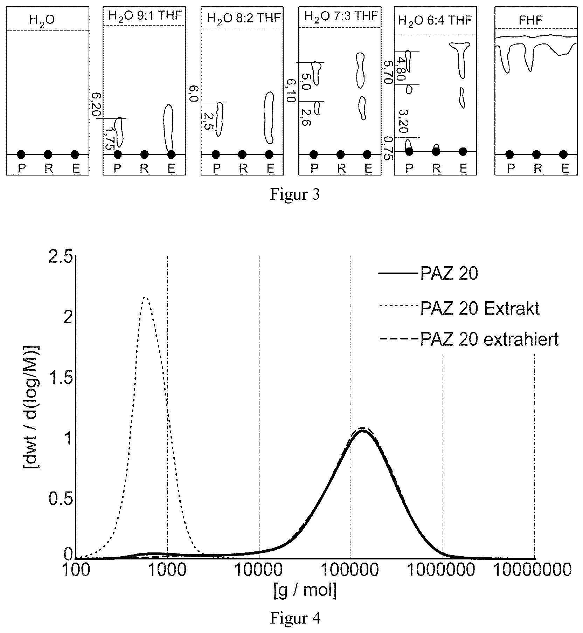

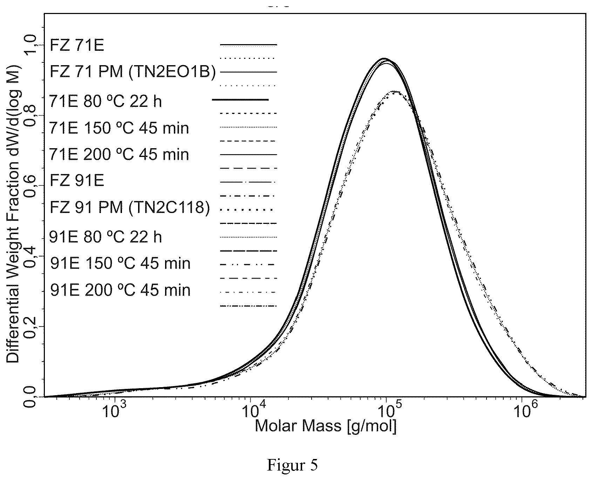

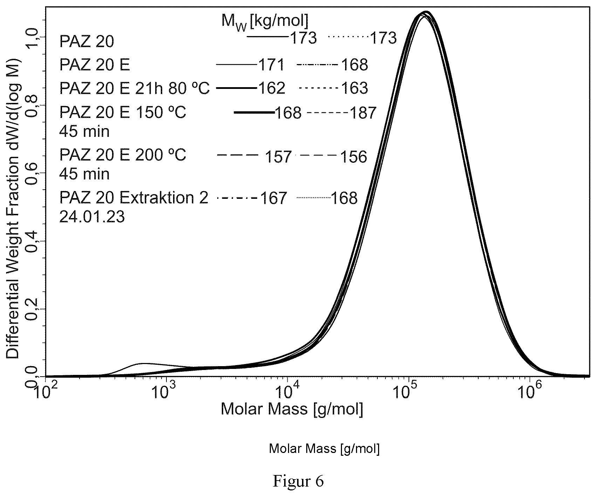

Die unter den Beispielen 1 bis 5 hergestellten extrahierten PBSₑₓ wurden auf Oligomerrückbildung geprüft. Dafür wurden die Proben jeweils für 24 h bei 80 °C, 40 min bei 150 °C und 40 min bei 200 °C temperiert, abgeschreckt, getrocknet und anschließend vermessen. Fig. 4 und 5 zeigen, dass keine Rückbildung unter den untersuchten Bedingungen zu beobachten ist und lediglich ein geringer Abbau des Molekulargewichtes bei den 200 °C Proben zu erkennen ist.

## Patentansprüche

1. Ein Verfahren für die Extraktion von niedermolekularen Bestandteilen aus Polyestern, **dadurch gekennzeichnet, dass** das Verfahren die Schritte
i) Vorlegen einer festen polyesterhaltigen Phase
ii) Vorlegen einer flüssigen Extraktionsmittelphase
iii) in Kontakt bringen der festen polyesterhaltigen Phase mit der flüssigen Extraktionsmittelphase,
umfasst,
**dadurch gekennzeichnet, dass**
- die flüssige Extraktionsmittelphase ein nichtaromatisches, organisches Lösungsmittel umfasst, wobei das nichtaromatische, organische Lösungsmittel ausgewählt ist aus der Gruppe bestehend aus Ethern, Ketonen und Mischungen davon, und
- die feste polyesterhaltigen Phase einen Polyester enthält, welcher aus Dicarbonsäure-Monomeren und Diol-Monomeren hergestellt wurde.

2. Das Verfahren nach Anspruch 1, **dadurch gekennzeichnet, dass** die Dicarbonsäure-Monomere ausgewählt sind aus der Gruppe bestehend aus Alkan-Dicarbonsäuren, Alken-Dicarbonsäuren, und Mischungen davon, bevorzugt aus Oxalsäure, Malonsäure, Bernsteinsäure, Glutarsäure, Adipinsäure, Pimelinsäure, Maleinsäure und Furmarsäure, bevorzugt ausgewählt aus Bernsteinsäure, Maleinsäure und Mischungen davon.

3. Das Verfahren nach einem der Ansprüche 1 oder 2, **dadurch gekennzeichnet, dass** die Diol-Monomere ausgewählt sind aus der Gruppe bestehend aus 1,2 Ethandiol, 1,3 Propandiol, 1,4 Butandiol, 1,5 Pentandiol und 1,6 Hexandiol, bevorzugt ist das Diol-Monomer 1,4 Butandiol.

4. Das Verfahren nach einem der vorherigen Ansprüche, **dadurch gekennzeichnet, dass** das nichtaromatische, organische Lösungsmittel ausgewählt ist aus der Gruppe bestehend aus Ketonen, cyclischen Ethern und Mischungen davon, bevorzugt ist das nichtaromatische, organische Lösungsmittel Tetrahydrofuran oder Aceton.

5. Das Verfahren nach einem der vorherigen Ansprüche, **dadurch gekennzeichnet, dass** die niedermolekularen Bestandteile der polyesterhaltigen Phase einen R_{f}-Wert von mehr als 0,2, ermittelt durch Dünnschichtchromatographie mit der flüssigen Extraktionsmittelphase als Laufmittel, und die hochmolekularen Bestandteile der polyesterhaltigen Phase einen R_{f}-Wert von weniger als 0,05 besitzen.

6. Das Verfahren nach einem der vorherigen Ansprüche, **dadurch gekennzeichnet, dass** in Schritt iii) die feste polyesterhaltige Phase und die flüssige Extraktionsmittelphase relativ zueinander eine Bewegung erfahren, wobei die relative Bewegung bevorzugt durch eine Soxhlet-Extraktion, eine gerührte fest-flüssig-Extraktion oder durch Wanderung der Extraktionsmittelfront durch ein Festbett der festen polyesterhaltigen Phase hervorgerufen wird.

7. Das Verfahren nach einem der vorherigen Ansprüche, **dadurch gekennzeichnet, dass** das Verfahren die Schritte
iv) Trennung der festen polyesterhaltige Phase von der flüssigen Extraktionsmittelphase, und
v) Trocknen der festen polyesterhaltigen Phase, wobei ein polyesterhaltiger Feststoff mit geringen extrahierbaren Anteilen erhalten wird,
umfasst.

8. Das Verfahren nach einem der vorherigen Ansprüche, **dadurch gekennzeichnet, dass** Schritt iii) für einen Zeitraum im Bereich von 0,1 bis 72 h, bevorzugt von 1 bis 36 h, mehr bevorzugt von 2 bis 30 h durchgeführt wird.

9. Das Verfahren nach einem der vorherigen Ansprüche, **dadurch gekennzeichnet, dass** Schritt iii) bei einer Temperatur im Bereich von 0 bis 100 °C, bevorzugt von 30 bi 80 °C, mehr bevorzugter von 45 bis 60 °C durchgeführt wird.

10. Das Verfahren nach einem der vorherigen Ansprüche, **dadurch gekennzeichnet, dass** die feste polyesterhaltige Phase den Polyester in einer Menge im Bereich von 20 bis 100 Gew.%, bevorzugt von 40 bis 100 Gew.%, mehr bevorzugt von 50 bis 100 Gew.%, bezogen auf das Gesamtgewicht der festen polyesterhaltigen Phase enthält.

11. Das Verfahren nach einem der vorherigen Ansprüche, **dadurch gekennzeichnet, dass** die flüssige Extraktionsmittelphase das nichtaromatische, organische Lösungsmittel in einer Menge im Bereich von 20 bis 100 Gew.%, bevorzugt von 25 bis 100 Gew.%, bezogen auf das Gesamtgewicht der flüssigen Extraktionsmittelphase enthält.

12. Ein Polyester, welcher aus Dicarbonsäure-Monomeren und Diol-Monomeren hergestellt wurde, **dadurch gekennzeichnet, dass** der Polyester eine Polydispersität (M_{w}/Mₙ), ermittelt durch GPC im Bereich von 2,0 bis 5,0, bevorzugt 3,0 bis 4,5 besitzt und der Gewichtsanteil an niedermolekularen Polykondensationsprodukten mit einem Massenmittel der Molmasse (Mw) von ≤ 2.000 g/mol und Monomeren mit einem Massenmittel der Molmasse (Mw) von ≤ 2.000 g/mol zusammen weniger als 1 Gew.% beträgt, bevorzugt ≤ 0,5 Gew.%, mehr bevorzugt in einem Bereich von 0,01 Gew.% bis 0,5 Gew.% liegt, bezogen auf die Gesamtmasse des Polyesters.
